# EUROPEAN PATENT APPLICATION

(11) **EP 4 044 588 A1**
(43) Date of publication of application: **17.08.2022**
(21) Application number: 20873388.1
(22) Date of filing: 23.06.2020
(51) Int. Cl.: H04N 5/374, H04N 5/376

(54) **IMAGING CIRCUIT AND IMAGING DEVICE**

(30) Priority: 09.10.2019 JP 2019185642
(71) Applicant: Sony Semiconductor Solutions Corporation, Atsugi-shi Kanagawa 243-0014 (JP); Sony Semiconductor Solutions Corporation, Atsugi-shi, Kanagawa 243-0014 (JP)
(72) Inventor: KUDO, Shigetaka, Atsugi-shi, Kanagawa 243-0014 (JP)
(74) Representative: Müller Hoffmann & Partner
(86) International application number: PCT/JP2020/024512
(87) International publication number: WO 2021/070426

(57) **Abstract**

A timing of the readout from an imaging circuit is controlled from the outside of the imaging circuit.

An exposure control signal receiving section is configured to receive, from outside, an exposure control signal that controls a timing at which plural pixels are exposed. A control signal receiving section is configured to receive, from the outside, a readout control signal that controls a timing at which the plural pixels are read out. A vertical driving control signal generating section is configured to generate, on the basis of the exposure control signal and the readout control signal, a vertical driving control signal that generates a control signal for exposure and readout with respect to each of pixel columns of a pixel section. A vertical driving circuit is configured to drive and control each of the pixel columns according to the vertical driving control signal.

## Description

### [Technical Field]

The present technology relates to an imaging circuit. More particularly, the present technology relates to an imaging circuit and an imaging apparatus in which exposure is controlled from outside.

### [Background Art]

In recent years, CMOS (Complementary Metal Oxide Semiconductor) image sensors have been widely used as imaging elements. Such CMOS image sensors employ global shutters as electronic shutters to suppress the distortion of a captured image that occurs when an image of a moving subject is captured. In a global shutter, the timing at which exposure starts is the same among all the pixels in a pixel array, and so is the timing at which exposure ends. In an imaging circuit using such a CMOS image sensor, the period from a sweep timing to a readout timing by the electronic shutter operation is the time (exposure time) during which a photocharge is accumulated (See, for example, PTL 1).

### [Citation List]

### [Patent Literature]

[PTL 1]
Japanese Patent Laid-Open No. 2017-123695

### [Summary]

### [Technical Problems]

In the existing technology described above, control is performed such that a readout operation is performed following a sweep operation. Therefore, since the timing of the readout from the pixels is generated inside the imaging circuit, the readout timing cannot be controlled from outside. Accordingly, it has been difficult to output data at a necessary timing in a circuit at a rear stage of the imaging circuit or to synchronize the outputs of plural imaging circuits.

The present technology has been made in view of such circumstances, and an object of the present technology is to control the timing of the readout from an imaging circuit from the outside of the imaging circuit.

### [Solution to Problems]

The present technology has been made to solve the problems described above. A first aspect of the present technology is an imaging circuit including a pixel section in which plural pixels are arranged in a two-dimensional matrix, an exposure control signal receiving section configured to receive, from outside, an exposure control signal that controls a timing at which the plural pixels are exposed, a readout control signal receiving section configured to receive, from the outside, a readout control signal that controls a timing at which the plural pixels are read out, a vertical driving control signal generating section configured to generate, on the basis of the exposure control signal and the readout control signal, a vertical driving control signal that controls exposure and readout with respect to each of pixel columns of the pixel section, and a vertical driving circuit configured to drive and control each of the pixel columns according to the vertical driving control signal. With this configuration, the readout control signal receiving section is provided separately from the exposure control signal receiving section. This configuration provides an effect that exposure and readout are controlled independently of each other.

Further, in this first aspect, an AD conversion control signal generating section configured to generate, on the basis of the readout control signal, an AD conversion control signal for converting signals read out from the respective pixel columns from analog signals into digital signals, and an AD converting section configured to convert, according to the AD conversion control signal, signals read out from a corresponding one of the pixel columns from analog signals into digital signals may be further included. This configuration provides an effect that the signals read out from the respective pixel columns are subjected to AD conversion.

Further, in this first aspect, the exposure control signal may include a trigger signal indicating an exposure period of the plural pixels. Further, the exposure control signal may include an exposure start signal indicating a timing at which exposure of the plural pixels starts and an exposure end signal indicating a timing at which the exposure of the plural pixels ends.

Further, in this first aspect, the plural pixels may include respective charge holding sections each configured to hold a charge that has been exposed, and the vertical driving control signal generating section may generate the vertical driving control signal so as to perform an operation of causing the charge holding sections to hold charges exposed on the basis of the exposure control signal and then, on the basis of the readout control signal, sequentially reading out, per pixel row of the pixel section, signals based on the charges held in the respective charge holding sections. This configuration provides an effect that exposure and readout are controlled independently of each other in an imaging circuit that employs a global shutter.

Further, in this first aspect, the exposure control signal may include a signal that controls exposure timings so as to expose same pixels multiple times. This configuration provides an effect that overlay shooting control is performed by performing exposure multiple times.

Further, in this first aspect, the exposure control signal may include plural signals that control respective exposure timings so as to expose different pixels from each other. This configuration provides an effect that different exposure controls are performed on different pixels in the pixel section.

Further, a second aspect of the present technology is an imaging apparatus including plural imaging circuits each including a pixel section in which plural pixels are arranged in a two-dimensional matrix, an exposure control signal receiving section configured to receive, from outside, an exposure control signal that controls a timing at which the plural pixels are exposed, a readout control signal receiving section configured to receive, from the outside, a readout control signal that controls a timing at which the plural pixels are read out, a vertical driving control signal generating section configured to generate, on the basis of the exposure control signal and the readout control signal, a vertical driving control signal that generates a control signal for exposure and readout with respect to each of pixel columns of the pixel section, and a vertical driving circuit configured to drive and control each of the pixel columns according to the vertical driving control signal, in which the readout control signal includes a signal common to the plural imaging circuits. This configuration provides an effect that the outputs of the plural imaging circuits are synchronized.

Further, a third aspect of the present technology is an imaging apparatus including plural imaging circuits each including a pixel section in which plural pixels are arranged in a two-dimensional matrix, an exposure control signal receiving section configured to receive, from outside, an exposure control signal that controls a timing at which the plural pixels are exposed, a readout control signal receiving section configured to receive, from the outside, a readout control signal that controls a timing at which the plural pixels are read out, a vertical driving control signal generating section configured to generate, on the basis of the exposure control signal and the readout control signal, a vertical driving control signal that generates a control signal for exposure and readout with respect to each of pixel columns of the pixel section, and a vertical driving circuit configured to drive and control each of the pixel columns according to the vertical driving control signal, in which the readout control signal includes a signal independent for each of the plural imaging circuits. This configuration provides an effect that the outputs of the plural imaging circuits are controlled independently of each other.

### [Brief Description of Drawings]

[FIG. 1]

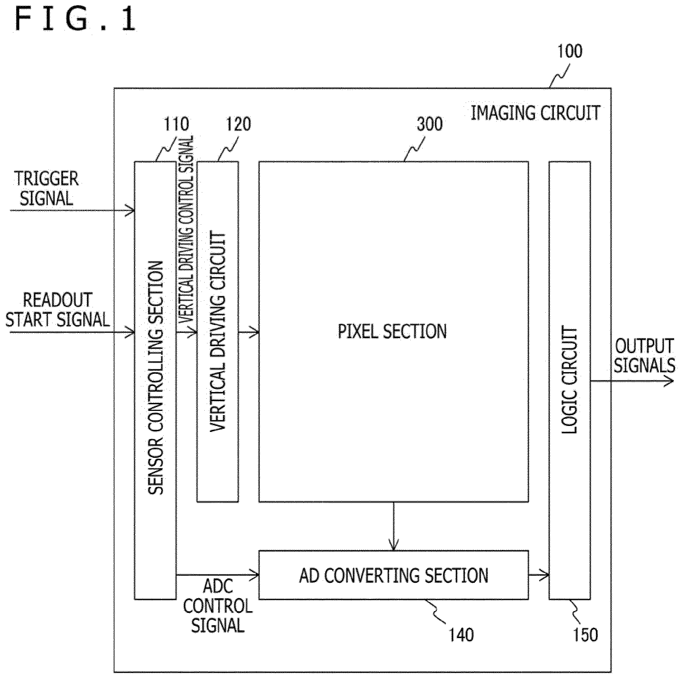

   FIG. 1 is a diagram illustrating an example of an overall configuration of an imaging circuit 100 in a first embodiment of the present technology.
[FIG. 2]

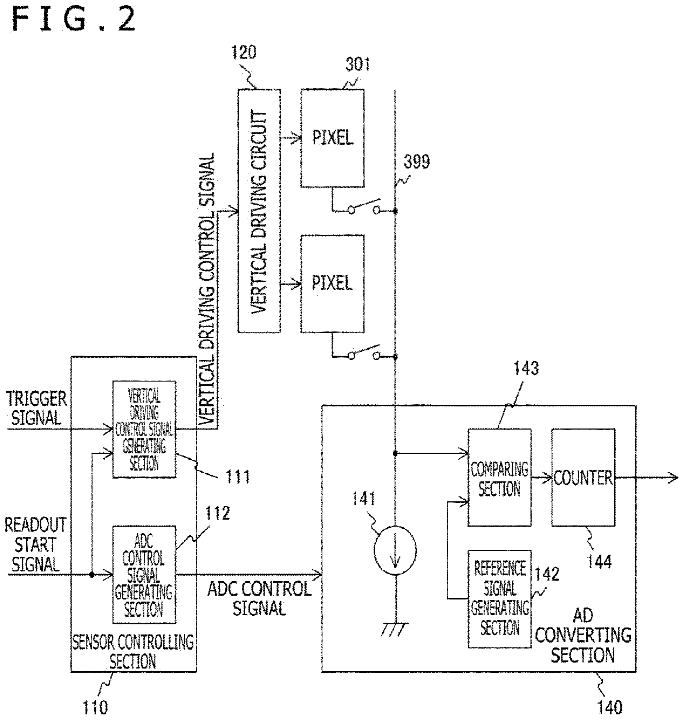

   FIG. 2 is a diagram illustrating an example of a configuration of a main part of the imaging circuit 100 in the first embodiment of the present technology.
[FIG. 3]

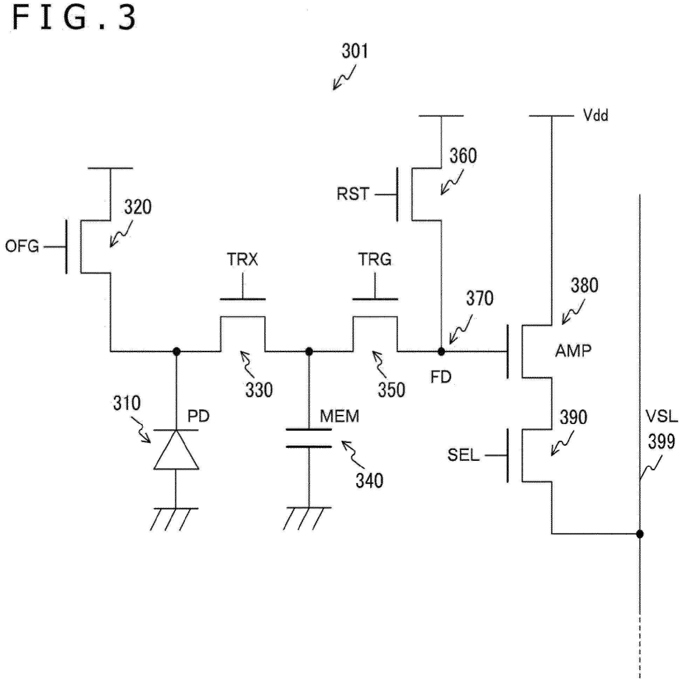

   FIG. 3 is a diagram illustrating an example of a configuration of a pixel 301 in a pixel section 300 according to the embodiment of the present technology.
[FIG. 4]

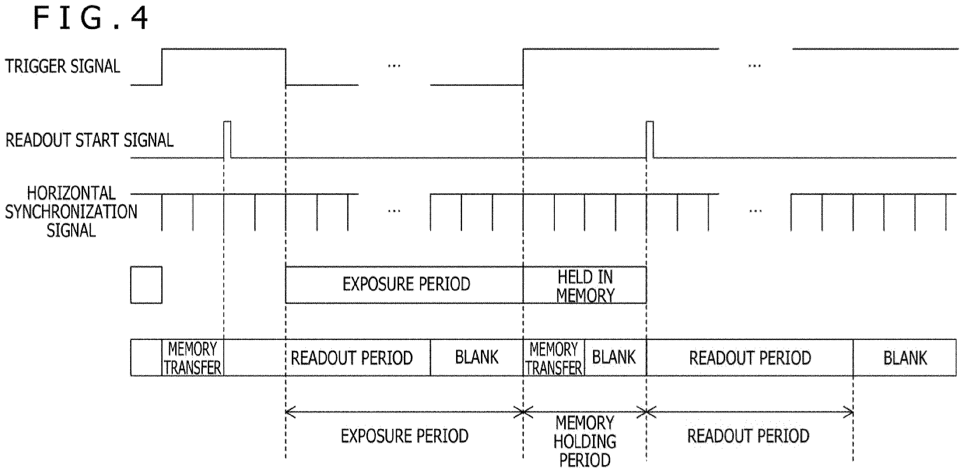

   FIG. 4 is a diagram illustrating an example of operation timings of the imaging circuit 100 in the first embodiment of the present technology.
[FIG. 5]

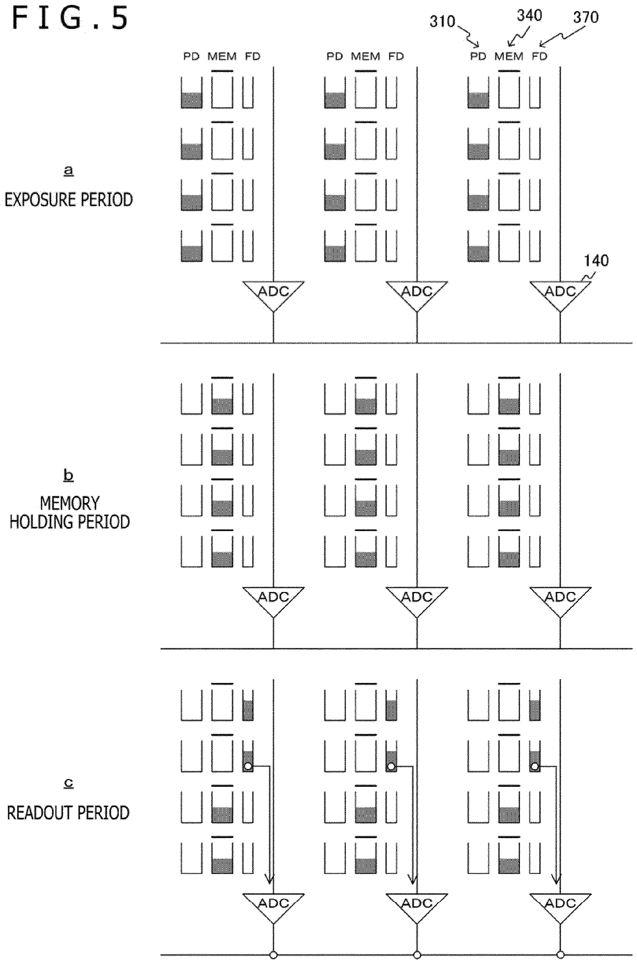

   FIG. 5 depicts diagrams each illustrating an example of the states of pixels 301 according to the first embodiment of the present technology in each period.
[FIG. 6]

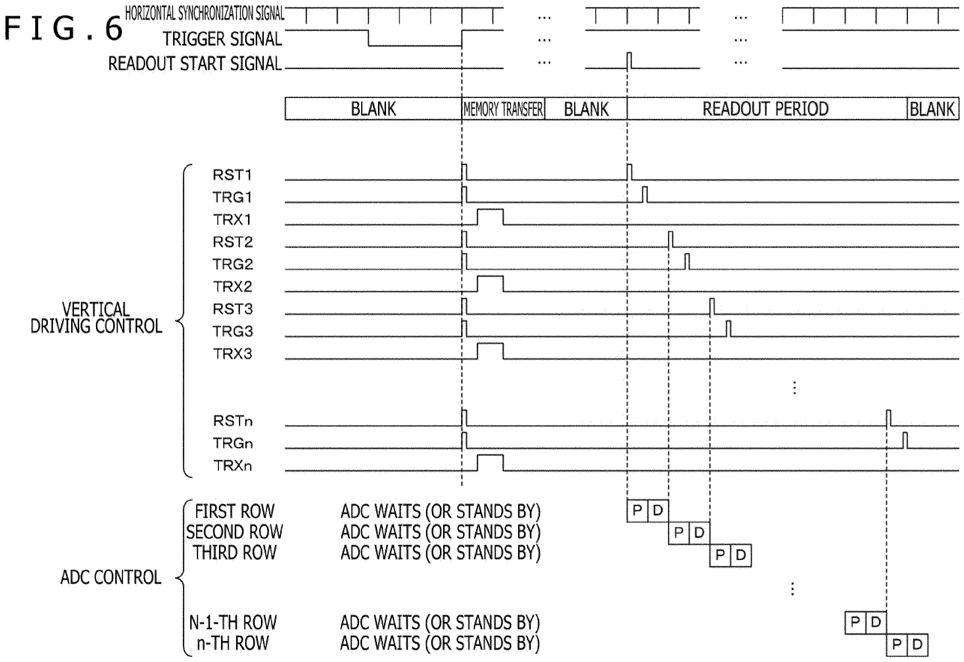

   FIG. 6 is a diagram illustrating an example of timings of vertical driving control and ADC control in the imaging circuit 100 in the first embodiment of the present technology.
[FIG. 7]

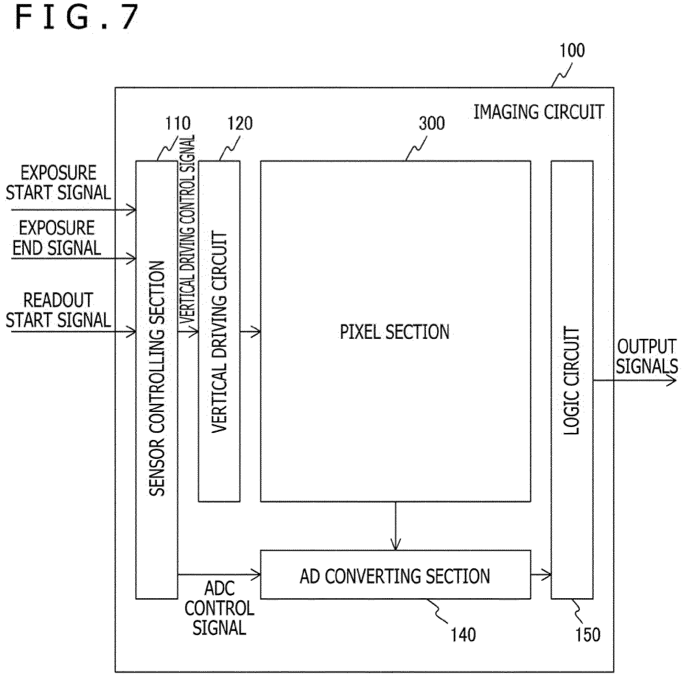

   FIG. 7 is a diagram illustrating an example of an overall configuration of the imaging circuit 100 in a second embodiment of the present technology.
[FIG. 8]

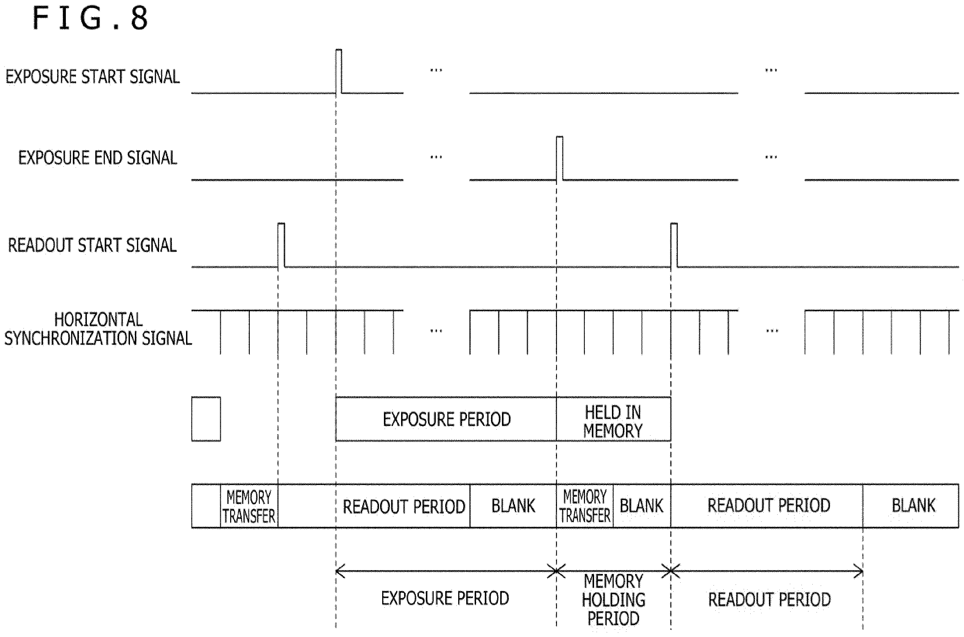

   FIG. 8 is a diagram illustrating an example of operation timings of the imaging circuit 100 in the second embodiment of the present technology.
[FIG. 9]

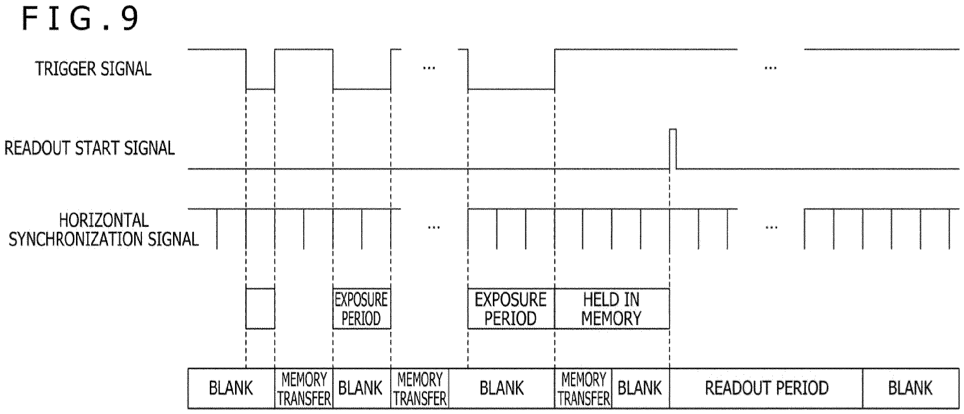

   FIG. 9 is a diagram illustrating an example of operation timings of the imaging circuit 100 in a third embodiment of the present technology.
[FIG. 10]

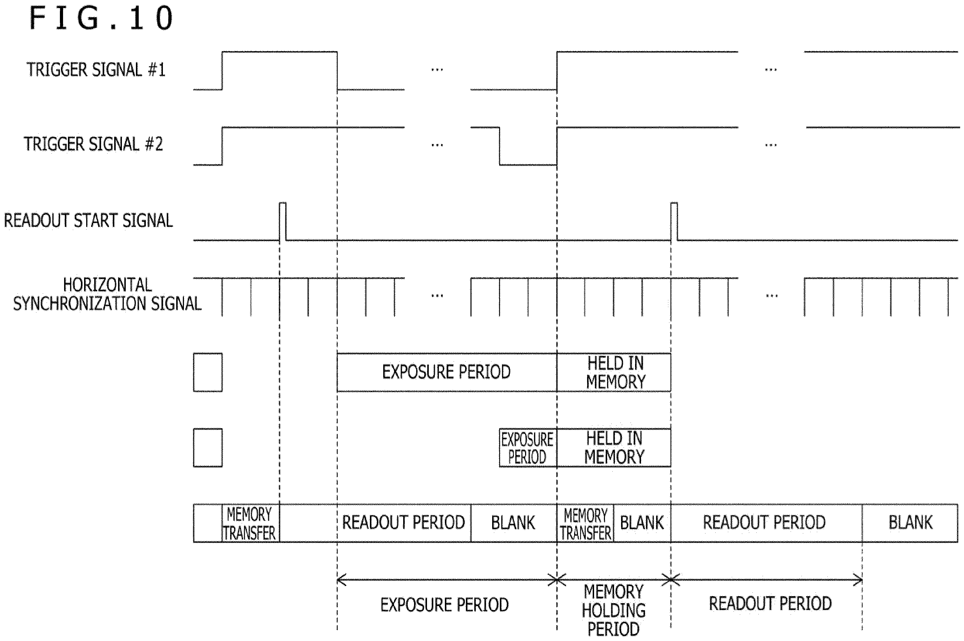

   FIG. 10 is a diagram illustrating an example of operation timings of the imaging circuit 100 in a fourth embodiment of the present technology.
[FIG. 11]

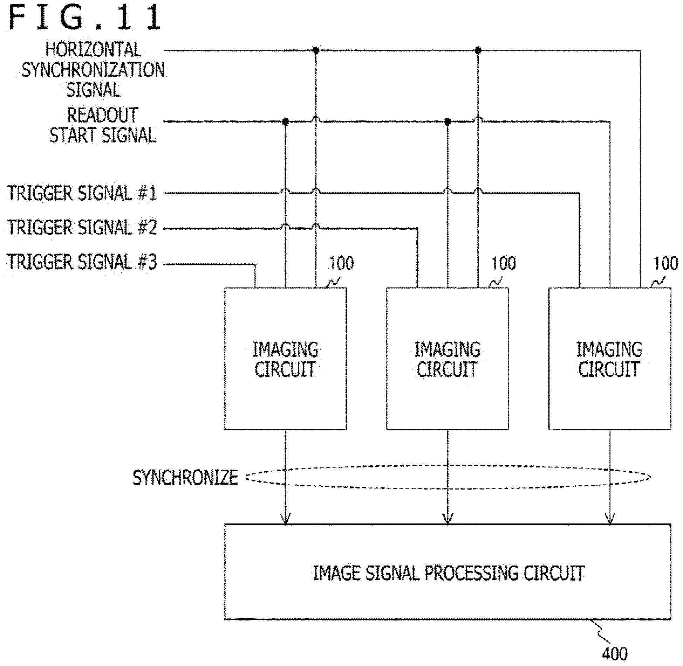

   FIG. 11 is a diagram illustrating an example of an overall configuration of an imaging apparatus in a fifth embodiment of the present technology.
[FIG. 12]

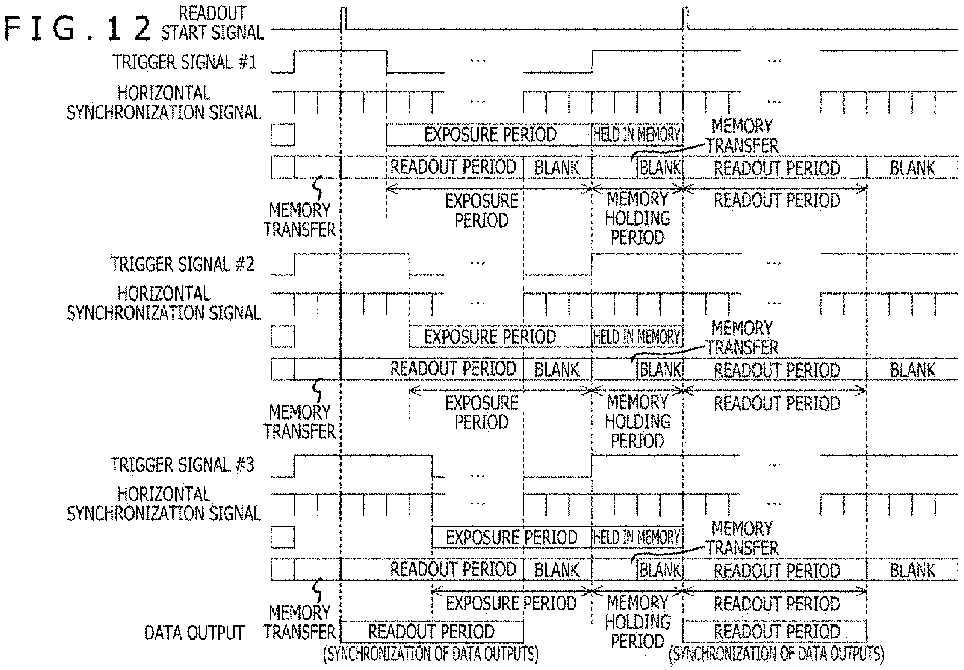

   FIG. 12 is a diagram illustrating an example of operation timings of the imaging apparatus in the fifth embodiment of the present technology.
[FIG. 13]

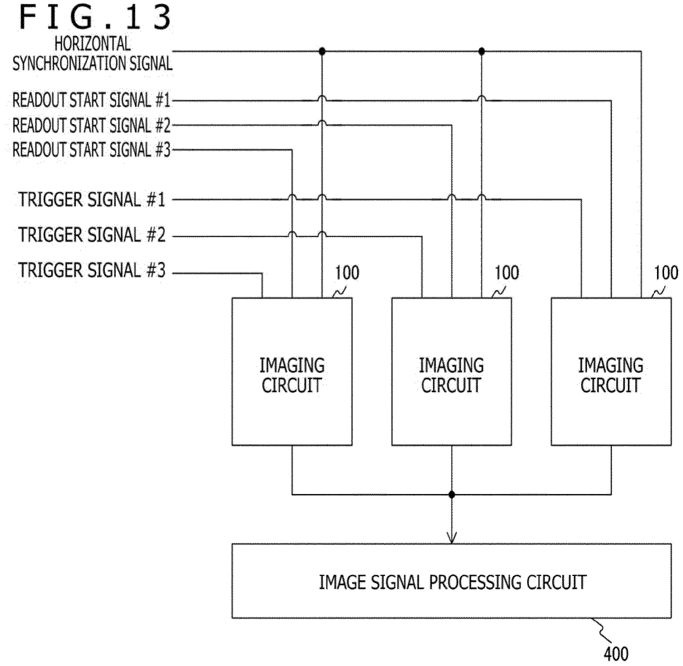

   FIG. 13 is a diagram illustrating an example of an overall configuration of the imaging apparatus in a sixth embodiment of the present technology.
[FIG. 14]

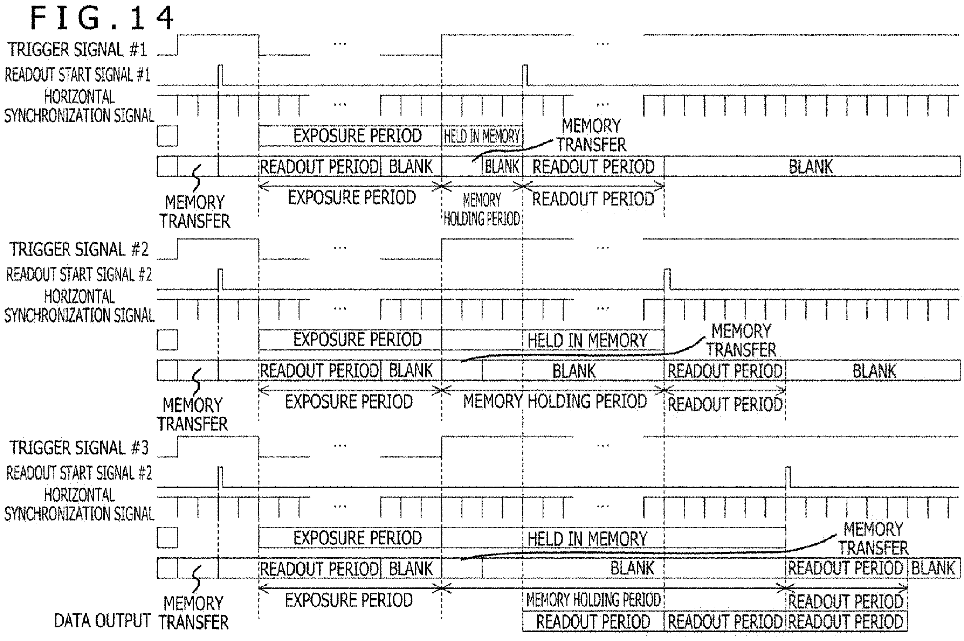

   FIG. 14 is a diagram illustrating an example of operation timings of the imaging apparatus in the sixth embodiment of the present technology.

### [Description of Embodiments]

Hereinafter, modes for carrying out the present technology (hereinafter referred to as embodiments) will be described. The description will be made in the following order.
1. First Embodiment (an application example in the case of exposure control using a trigger signal)
2. Second Embodiment (an application example in the case of exposure control using an exposure start signal and an exposure end signal)
3. Third Embodiment (an application example in the case of trigger multiple exposure)
4. Fourth Embodiment (an application example in the case of exposure control using plural trigger signals)
5. Fifth Embodiment (an example in which data outputs of plural imaging circuits are synchronized)
6. Sixth Embodiment (an example in which pieces of data are sequentially output from the plural imaging circuits)

### <1. First Embodiment>

### [Imaging Circuit]

FIG. 1 is a diagram illustrating an example of an overall configuration of an imaging circuit 100 in a first embodiment of the present technology.

The imaging circuit 100 is an image sensor that captures an image of a subject and outputs the captured image as imaging signals. This imaging circuit 100 includes a pixel section 300, a sensor controlling section 110, a vertical driving circuit 120, an AD converting section 140, and a logic circuit 150.

The pixel section 300 is a pixel array in which plural pixels are arranged in a two-dimensional matrix. Each pixel in the pixel section 300 includes a photoelectric conversion element that generates a charge (photocharge) having a charge amount corresponding to the amount of incident light and accumulates the charge inside the photoelectric conversion element. The pixel section 300 is driven and controlled by the vertical driving circuit 120 and outputs signals based on charges that have been generated.

The sensor controlling section 110 controls the entire imaging circuit 100. This sensor controlling section 110 receives a trigger signal and a readout start signal from the outside of the imaging circuit 100 and generates a control signal for the pixel section 300 on the basis of these trigger signal and readout start signal. Here, the trigger signal is a signal that indicates the exposure period of the pixels of the pixel section 300. Further, the readout start signal is a signal that indicates the start timing at which signals are read out from the pixels of the pixel section 300.

The vertical driving circuit 120 drives and controls, according to the control from the sensor controlling section 110, each of pixel columns in a vertical direction in the pixel section 300.

The AD converting section 140 is an AD converter (ADC: Analog-to-Digital Converter) that converts signals read out from a corresponding one of the pixel columns of the pixel section 300 from analog signals into digital signals, according to the control from the sensor controlling section 110.

The logic circuit 150 is a circuit that outputs the digital signals output from the AD converting section 140 to the outside of the imaging circuit 100.

FIG. 2 is a diagram illustrating an example of a configuration of a main part of the imaging circuit 100 in the first embodiment of the present technology.

The sensor controlling section 110 includes a vertical driving control signal generating section 111 and an ADC control signal generating section 112. The vertical driving control signal generating section 111 generates, on the basis of the trigger signal and the readout start signal, a vertical driving control signal that generates a control signal for exposure and readout with respect to each of the pixel columns of the pixel section 300. It is noted that the vertical driving control signal generating section 111 is an example of an exposure control signal receiving section, a readout control signal receiving section, and a vertical driving control signal generating section described in the claims.

The ADC control signal generating section 112 generates, on the basis of the readout start signal, an ADC control signal for converting signals read out from the respective pixel columns of the pixel section 300 from analog signals into digital signals. It is noted that the ADC control signal generating section 112 is an example of an AD conversion control signal generating section described in the claims.

The vertical driving circuit 120 drives and controls each of the pixel columns according to the vertical driving control signal generated by the vertical driving control signal generating section 111. Accordingly, pixels 301 of each pixel column sequentially output the signals that have been read out to a corresponding vertical signal line (VSL: Vertical Signal Line) 399.

The vertical signal line 399 is connected to the AD converting section 140. According to the ADC control signal generated by the ADC control signal generating section 112, the AD converting section 140 performs the AD conversion on the signals read out from the corresponding pixel column of the pixel section 300.

The AD converting section 140 includes a constant current source 141, a reference signal generating section 142, a comparing section 143, and a counter 144. The constant current source 141 is a current source that supplies the current necessary to read out pixel signals from the pixels 301. The constant current source 141 includes a MOS transistor, for example.

The reference signal generating section 142 generates a reference signal in the comparing section 143. This reference signal is also called a ramp signal because the reference signal has a slope in a period in which the reference signal is compared with a pixel signal. The reference signal generating section 142 includes a digital-to-analog converter (DAC), for example.

The comparing section 143 compares the pixel signal read out from each pixel 301 with the reference signal supplied from the reference signal generating section 142. The counter 144 counts a counter value until the pixel signal and the reference signal match in the comparing section 143. In this way, the pixel signal, which is an analog signal, can be converted into a digital signal.

FIG. 3 is a diagram illustrating an example of a configuration of the pixel 301 in the pixel section 300 according to the embodiment of the present technology.

The pixel 301 includes a photoelectric converting section 310, a charge discharging section 320, a first charge transferring section 330, a charge holding section 340, a second charge transferring section 350, a charge-to-voltage converting section 360, a charge resetting section 370, a signal amplifying section 380, and a pixel selecting section 390.

The photoelectric converting section 310 is a PN junction photodiode (PD) and generates and accumulates a charge corresponding to the amount of incident light during exposure.

The charge discharging section 320 discharges the charge accumulated in the photoelectric converting section 310, according to an overflow gate signal OFG.

The first charge transferring section 330 transfers the charge accumulated in the photoelectric converting section 310 to the charge holding section 340, according to a first transfer signal TRX.

The charge holding section 340 is a memory (MEM) that holds the charge accumulated in the photoelectric converting section 310 during exposure.

The second charge transferring section 350 transfers the charge held in the charge holding section 340 to the charge-to-voltage converting section 360, according to a second transfer signal TRG.

The charge-to-voltage converting section 360 is a floating diffusion (FD) capacitance that is formed between a drain of the second charge transferring section 350 and a source of the charge resetting section 370. The charge-to-voltage converting section 360 accumulates the charge transferred from the second charge transferring section 350.

The charge resetting section 370 resets the charge accumulated in the charge-to-voltage converting section 360, according to a reset signal RST.

The signal amplifying section 380 amplifies the charge accumulated in the charge-to-voltage converting section 360 and outputs a pixel signal of a level corresponding to the charge. This signal amplifying section 380 has a gate electrode connected to the charge-to-voltage converting section 360 and a drain connected to a power supply voltage Vdd. The signal amplifying section 380 serves as an input section of a readout circuit, that is, what is generally called a source follower circuit, which reads out the charge obtained by photoelectric conversion in the photoelectric converting section 310.

The pixel selecting section 390 selects any one of the pixels in the pixel section 300. The pixel selecting section 390 is connected between a source of the signal amplifying section 380 and the vertical signal line 399, and a selection signal SEL is supplied to a gate electrode of the pixel selecting section 390. When the selection signal SEL becomes the H level, the pixel selecting section 390 enters a conductive state, causing the pixel to be in what is generally called a selected state. When the pixel is in the selected state, a signal output from the signal amplifying section 380 is read out via the vertical signal line 399.

### [Operation]

FIG. 4 is a diagram illustrating an example of operation timings of the imaging circuit 100 in the first embodiment of the present technology.

As described above, the trigger signal is a signal that indicates the exposure period of the pixels of the pixel section 300. Specifically, the exposure period is a period in which the trigger signal is in the state of the L level. That is, the exposure period is a period from the falling of the trigger signal to the rise of the trigger signal.

Further, the readout start signal is a signal that indicates the start timing at which signals are read out from the pixels of the pixel section 300. Specifically, the timing at which the readout start signal rises from the L level to the H level is the timing at which a readout period starts. A period from the end of the exposure period to the start of the readout period is a memory holding period. In this memory holding period, charges accumulated in photoelectric converting sections 310 during the exposure period are held in their respective charge holding sections 340. Then, in the readout period, the charges held in the charge holding sections 340 until then are sequentially read out, and signals based on the charges are output to the corresponding vertical signal line 399.

Further, a horizontal synchronization signal is a signal for performing synchronization per pixel row in a horizontal direction of the pixel section 300.

FIG. 5 depicts diagrams each illustrating an example of the states of the pixels 301 according to the first embodiment of the present technology in each period.

As illustrated in a of FIG. 5, in the exposure period, the charges each corresponding to the amount of incident light are accumulated in the respective photoelectric converting sections 310. When the trigger signal rises to the H level, the exposure period ends. As illustrated in b of FIG. 5, the charges accumulated in the photoelectric converting sections 310 are transferred to the respective charge holding sections 340 at a time. The charges are held in the respective charge holding sections 340 until the readout starts. Since the charge holding sections 340 are light-shielded, the charge holding sections 340 are not subjected to exposure.

After that, when the readout start signal is input into the imaging circuit 100 from outside, the charges held in the charge holding sections 340 in the pixels 301 are transferred to their respective charge-to-voltage converting sections 360 line by line in sequence, as illustrated in c of FIG. 5. The signals based on the charges are converted from analog signals into digital signals in the corresponding AD converting section 140 and read out as image data. It is noted that this readout can be performed simultaneously at multiple rows to increase the speed.

Accordingly, the start and end of the exposure period can be controlled at any timing by using the trigger signal, and the readout of pixel data can be independently controlled at any timing by using the readout start signal.

FIG. 6 is a diagram illustrating an example of timings of vertical driving control and ADC control in the imaging circuit 100 in the first embodiment of the present technology.

When the trigger signal rises to the H level, in each of all the pixels 301 of the pixel section 300, the RST signal and the TRG signal become the H level, temporarily resetting the charge holding section 340. Then, when the TRX signal rises to the H level, the charge accumulated in the photoelectric converting section 310 is transferred to the charge holding section 340 and held therein.

After that, the readout start signal is input into the imaging circuit 100 from outside. In response, per pixel row of the pixel section 300, the RST signal becomes the H level, resetting the charge-to-voltage converting sections 360, after which the TRG signal becomes the H level, transferring the charges held in the charge holding sections 340 to the respective charge-to-voltage converting sections 360. Accordingly, the AD converting section 140 reads out a reset voltage (Pre-Charge phase: P phase), and then reads out an addition voltage of the reset voltage and a signal voltage (Data phase: D phase). That is, the AD converting section 140 obtains a signal obtained by subtracting the reset voltage from the addition voltage through correlated double sampling processing (CDS).

By contrast, while such correlated double sampling processing is not being performed, the AD converting section 140 is in a stop state or a standby state until the next readout start signal is input. Accordingly, consumption power can be suppressed.

In such a way, according to the first embodiment of the present technology, in addition to the trigger signal, the readout start signal is input as an input signal of the imaging circuit 100. Accordingly, the timing of the readout from the imaging circuit can be controlled independently of the exposure period. That is, providing the readout start signal can separate the exposure period and the readout period from each other, and the exposure and the data output can be performed at any necessary timings.

### <2. Second Embodiment>

In the first embodiment described above, an example in the case where the trigger signal is used as the exposure control signal has been described. In a second embodiment, an example in the case where an exposure start signal and an exposure end signal are used as exposure control signals will be described.

### [Imaging Circuit]

FIG. 7 is a diagram illustrating an example of an overall configuration of the imaging circuit 100 in the second embodiment of the present technology.

The basic configuration of the imaging circuit 100 in this second embodiment is similar to that in the first embodiment described above. In this second embodiment, the exposure start signal and the exposure end signal are input into the sensor controlling section 110 as the exposure control signals. The exposure start signal is a signal that indicates the timing at which the exposure of the pixel section 300 starts. The exposure end signal is a signal that indicates the timing at which the exposure of the pixel section 300 ends.

### [Operation]

FIG. 8 is a diagram illustrating an example of operation timings of the imaging circuit 100 in the second embodiment of the present technology.

In this second embodiment, the exposure period is a period from the timing at which the exposure start signal rises to the H level to the timing at which the exposure end signal rises to the H level.

The readout start signal is similar to that in the first embodiment described above. The timing at which this readout start signal rises from the L level to the H level is the timing at which the readout period starts.

In such a way, according to the second embodiment of the present technology, in addition to the exposure start signal and the exposure end signal, the readout start signal is input as an input signal of the imaging circuit 100. Accordingly, the timing of the readout from the imaging circuit can be controlled independently of the exposure period.

### <3. Third Embodiment>

In the first embodiment described above, charges accumulated by a single exposure are read out. This third embodiment assumes multiple exposure, which is exposure performed multiple times. It is noted that, since the overall configuration of the imaging circuit 100 is similar to that in the first embodiment described above, a detailed description thereof is omitted.

FIG. 9 is a diagram illustrating an example of operation timings of the imaging circuit 100 in the third embodiment of the present technology.

In this example, the trigger signal is in the state of the L level multiple times prior to the readout period, and the exposure period occurs multiple times. In this case, charges are transferred from the photoelectric converting sections 310 to the respective charge holding sections 340 each time an individual exposure period ends. Therefore, the charges are accumulated in the charge holding sections 340 without being read out.

After that, signals based on the charges exposed multiple times are read out in the readout period.

In such a way, according to the third embodiment of the present technology, the trigger signal is input multiple times. Accordingly, an effect similar to that of overlay shooting can be obtained.

### <4. Fourth Embodiment>

In the first embodiment described above, the exposure period is controlled by a single trigger signal. In this fourth embodiment, exposure control is assumed to be performed using plural trigger signals.

The overall configuration of the imaging circuit 100 is similar to that in the first embodiment described above, except that plural trigger signals are input. Each of the plural trigger signals is provided for a different one of image areas. Considerably, the plural trigger signals are used in the case where, for example, different exposure times are set for the top and bottom of the screen or where different shutter speeds are set for areas where the speeds of objects are different.

FIG. 10 is a diagram illustrating an example of operation timings of the imaging circuit 100 in the fourth embodiment of the present technology.

In this example, one pixel row is controlled by a first trigger signal #1, and another pixel row is controlled by a second trigger signal #2. Therefore, different exposure periods can be set for different pixel rows. The fourth embodiment is similar to the first embodiment described above in that, at the end of the exposure period, charges are transferred from the photoelectric converting sections 310 to the respective charge holding sections 340 and held therein.

In such a way, according to the fourth embodiment of the present technology, the use of the plural trigger signals can divide the area in the pixel section 300 and perform control with different exposure timings.

### <5. Fifth Embodiment>

An imaging apparatus can include the plural imaging circuits 100 described in the embodiments above. In this fifth embodiment, an example in which signals from the plural imaging circuits 100 are synchronously output will be described.

FIG. 11 is a diagram illustrating an example of an overall configuration of the imaging apparatus in the fifth embodiment of the present technology.

The imaging apparatus according to this fifth embodiment includes the plural imaging circuits 100 and an image signal processing circuit 400. The image signal processing circuit (ISP: Image Signal Processor) 400 is a circuit that performs predetermined signal processing on image signals output from the plural imaging circuits 100.

In this fifth embodiment, any of the first to fourth embodiments described above can be applied to each of the plural imaging circuits 100. Although the trigger signal is described here, the exposure start signal and the exposure end signal may be used, as in the second embodiment described above.

In this example, each of different trigger signals is separately input into a corresponding one of the plural imaging circuits 100. Therefore, each individual imaging circuit 100 corresponding to a different one of the plural trigger signals can be controlled independently and can capture an image at any exposure timing.

By contrast, the same readout start signal is commonly input into the plural imaging circuits 100. Therefore, the timings at which signals are output from the plural imaging circuits 100 to the image signal processing circuit 400 can be synchronized.

FIG. 12 is a diagram illustrating an example of operation timings of the imaging apparatus in the fifth embodiment of the present technology.

In this example, each of different trigger signals is separately input into the corresponding one of the plural imaging circuits 100, and their exposure periods are set independently of each other. In each of the imaging circuits 100, charges are transferred from the photoelectric converting sections 310 to the respective charge holding sections 340 and held therein at the end of the exposure period.

After that, when the common readout start signal rises to the H level, image signals are synchronously output from the plural imaging circuits 100 to the image signal processing circuit 400.

In such a way, according to the fifth embodiment of the present technology, the outputs from the plural imaging circuits 100 can be synchronously supplied to the image signal processing circuit 400. Accordingly, when plural sensors are controlled in, for example, a 360-degree camera, a drone-mounted camera, or the like, the output timings of pieces of image data thereof can be synchronized. Then, the pieces of data can be processed in parallel by the image signal processing circuit 400 at the rear stage.

### <6. Sixth Embodiment>

In the fifth embodiment described above, signals from the plural imaging circuits 100 are simultaneously output. In this sixth embodiment, an example in which signals from the plural imaging circuits 100 are individually output will be described.

FIG. 13 is a diagram illustrating an example of the overall configuration of the imaging apparatus in the sixth embodiment of the present technology.

The imaging apparatus in this sixth embodiment includes the plural imaging circuits 100 and the image signal processing circuit 400, as in the fifth embodiment described above, except that each individual readout start signal is input into a corresponding one of the plural imaging circuits 100. Therefore, the timings at which signals are output from the plural imaging circuits 100 to the image signal processing circuit 400 can be individually controlled.

FIG. 14 is a diagram illustrating an example of operation timings of the imaging apparatus in the sixth embodiment of the present technology.

In this example, as in the fifth embodiment described above, each of different trigger signals is separately input into a corresponding one of the plural imaging circuits 100, and their exposure periods can be set independently of each other. In each of the imaging circuits 100, charges are transferred from the photoelectric converting sections 310 to the respective charge holding sections 340 and held therein at the end of the exposure period.

After that, when the readout start signals rise to the H level in the respective imaging circuits 100, image signals are output from the respective imaging circuits 100 to the image signal processing circuit 400. In this example, an image signal is output from each of the imaging circuits 100 in chronological order. Under this assumption, therefore, a transmission path from the plural imaging circuits 100 to the image signal processing circuit 400 can be shared.

In such a way, according to the sixth embodiment of the present technology, the outputs from the plural imaging circuits 100 can be supplied to the image signal processing circuit 400 at different timings. Accordingly, for example, the image data output timings can be arranged in chronological order, and therefore the signal processing in the image signal processing circuit 400 at the rear stage can be simplified. Further, for example, when pieces of image data from plural sensors in a stereo camera or the like are combined and processed, no frame memory is necessary. Therefore, the system can be simplified, and costs can be reduced.

It is noted that each of the above-described embodiments describes an example for embodying the present technology, and the matters in the embodiments and the matters specifying the invention in the claims individually have a correspondence relation. Similarly, the matters specifying the invention in the claims and the matters in the embodiments of the present technology to which the same names as the matters specifying the invention in the claims are assigned individually have a correspondence relation. However, the present technology is not limited to the embodiments and can be embodied by applying various modifications to the embodiments without departing from the scope of the present technology.

It is noted that the effects described in the present specification are merely examples and are not limited. Further, there may be additional effects.

It is noted that the present technology can also have the following configurations.
(1) An imaging circuit including:
   a pixel section in which plural pixels are arranged in a two-dimensional matrix;
   an exposure control signal receiving section configured to receive, from outside, an exposure control signal that controls a timing at which the plural pixels are exposed;
   a readout control signal receiving section configured to receive, from the outside, a readout control signal that controls a timing at which the plural pixels are read out;
   a vertical driving control signal generating section configured to generate, on the basis of the exposure control signal and the readout control signal, a vertical driving control signal that generates a control signal for exposure and readout with respect to each of pixel columns of the pixel section; and
   a vertical driving circuit configured to drive and control each of the pixel columns according to the vertical driving control signal.
(2) The imaging circuit according to (1), further including:
   an AD conversion control signal generating section configured to generate, on the basis of the readout control signal, an AD conversion control signal for converting signals read out from the respective pixel columns from analog signals into digital signals; and
   an AD converting section configured to convert, according to the AD conversion control signal, signals read out from a corresponding one of the pixel columns from analog signals into digital signals.
(3) The imaging circuit according to (1) or (2), in which the exposure control signal includes a trigger signal indicating an exposure period of the plural pixels.
(4) The imaging circuit according to (1) or (2), in which the exposure control signal includes an exposure start signal indicating a timing at which exposure of the plural pixels starts and an exposure end signal indicating a timing at which the exposure of the plural pixels ends.
(5) The imaging circuit according to any one of (1) to (4),
   in which the plural pixels include respective charge holding sections each configured to hold a charge that has been exposed, and
   the vertical driving control signal generating section generates the vertical driving control signal so as to perform an operation of causing the charge holding sections to hold charges exposed on the basis of the exposure control signal and then, on the basis of the readout control signal, sequentially reading out, per pixel row of the pixel section, signals based on the charges held in the respective charge holding sections.
(6) The imaging circuit according to any one of (1) to (5), in which the exposure control signal includes a signal that controls exposure timings so as to expose same pixels multiple times.
(7) The imaging circuit according to any one of (1) to (5), in which the exposure control signal includes plural signals that control respective exposure timings so as to expose different pixels from each other.
(8) An imaging apparatus including:
   plural imaging circuits each including
      a pixel section in which plural pixels are arranged in a two-dimensional matrix,
      an exposure control signal receiving section configured to receive, from outside, an exposure control signal that controls a timing at which the plural pixels are exposed,
      a readout control signal receiving section configured to receive, from the outside, a readout control signal that controls a timing at which the plural pixels are read out,
      a vertical driving control signal generating section configured to generate, on the basis of the exposure control signal and the readout control signal, a vertical driving control signal that generates a control signal for exposure and readout with respect to each of pixel columns of the pixel section, and
      a vertical driving circuit configured to drive and control each of the pixel columns according to the vertical driving control signal,
   in which the readout control signal includes a signal common to the plural imaging circuits.
(9) An imaging apparatus including:
   plural imaging circuits each including
      a pixel section in which plural pixels are arranged in a two-dimensional matrix,
      an exposure control signal receiving section configured to receive, from outside, an exposure control signal that controls a timing at which the plural pixels are exposed,
      a readout control signal receiving section configured to receive, from the outside, a readout control signal that controls a timing at which the plural pixels are read out,
      a vertical driving control signal generating section configured to generate, on the basis of the exposure control signal and the readout control signal, a vertical driving control signal that generates a control signal for exposure and readout with respect to each of pixel columns of the pixel section, and
      a vertical driving circuit configured to drive and control each of the pixel columns according to the vertical driving control signal,
   in which the readout control signal includes a signal independent for each of the plural imaging circuits.

### [Reference Signs List]

- 100:: Imaging circuit
- 110:: Sensor controlling section
- 111:: Vertical driving control signal generating section
- 112:: ADC control signal generating section
- 120:: Vertical driving circuit
- 140:: AD converting section
- 141:: Constant current source
- 142:: Reference signal generating section
- 143:: Comparing section
- 144:: Counter
- 150:: Logic circuit
- 300:: Pixel section
- 301:: Pixel
- 310:: Photoelectric converting section
- 320:: Charge discharging section
- 330:: First charge transferring section
- 340:: Charge holding section
- 350:: Second charge transferring section
- 360:: Charge-to-voltage converting section
- 370:: Charge resetting section
- 380:: Signal amplifying section
- 390:: Pixel selecting section
- 399:: Vertical signal line
- 400:: Image signal processing circuit

## Claims

1. An imaging circuit comprising:
a pixel section in which plural pixels are arranged in a two-dimensional matrix;
an exposure control signal receiving section configured to receive, from outside, an exposure control signal that controls a timing at which the plural pixels are exposed;
a readout control signal receiving section configured to receive, from the outside, a readout control signal that controls a timing at which the plural pixels are read out;
a vertical driving control signal generating section configured to generate, on a basis of the exposure control signal and the readout control signal, a vertical driving control signal that controls exposure and readout with respect to each of pixel columns of the pixel section; and
a vertical driving circuit configured to drive and control each of the pixel columns according to the vertical driving control signal.

2. The imaging circuit according to claim 1, further comprising:
an AD conversion control signal generating section configured to generate, on a basis of the readout control signal, an AD conversion control signal for converting signals read out from the respective pixel columns from analog signals into digital signals; and
an AD converting section configured to convert, according to the AD conversion control signal, signals read out from a corresponding one of the pixel columns from analog signals into digital signals.

3. The imaging circuit according to claim 1, wherein the exposure control signal includes a trigger signal indicating an exposure period of the plural pixels.

4. The imaging circuit according to claim 1, wherein the exposure control signal includes an exposure start signal indicating a timing at which exposure of the plural pixels starts and an exposure end signal indicating a timing at which the exposure of the plural pixels ends.

5. The imaging circuit according to claim 1,
wherein the plural pixels include respective charge holding sections each configured to hold a charge that has been exposed, and
the vertical driving control signal generating section generates the vertical driving control signal so as to perform an operation of causing the charge holding sections to hold charges exposed on a basis of the exposure control signal and then, on a basis of the readout control signal, sequentially reading out, per pixel row of the pixel section, signals based on the charges held in the respective charge holding sections.

6. The imaging circuit according to claim 1, wherein the exposure control signal includes a signal that controls exposure timings so as to expose same pixels multiple times.

7. The imaging circuit according to claim 1, wherein the exposure control signal includes plural signals that control respective exposure timings so as to expose different pixels from each other.

8. An imaging apparatus comprising:
plural imaging circuits each including
a pixel section in which plural pixels are arranged in a two-dimensional matrix,
an exposure control signal receiving section configured to receive, from outside, an exposure control signal that controls a timing at which the plural pixels are exposed,
a readout control signal receiving section configured to receive, from the outside, a readout control signal that controls a timing at which the plural pixels are read out,
a vertical driving control signal generating section configured to generate, on a basis of the exposure control signal and the readout control signal, a vertical driving control signal that controls exposure and readout with respect to each of pixel columns of the pixel section, and
a vertical driving circuit configured to drive and control each of the pixel columns according to the vertical driving control signal,
wherein the readout control signal includes a signal common to the plural imaging circuits.

9. An imaging apparatus comprising:
plural imaging circuits each including
a pixel section in which plural pixels are arranged in a two-dimensional matrix,
an exposure control signal receiving section configured to receive, from outside, an exposure control signal that controls a timing at which the plural pixels are exposed,
a readout control signal receiving section configured to receive, from the outside, a readout control signal that controls a timing at which the plural pixels are read out,
a vertical driving control signal generating section configured to generate, on a basis of the exposure control signal and the readout control signal, a vertical driving control signal that controls exposure and readout with respect to each of pixel columns of the pixel section, and
a vertical driving circuit configured to drive and control each of the pixel columns according to the vertical driving control signal,
wherein the readout control signal includes a signal independent for each of the plural imaging circuits.
